# EUROPEAN PATENT SPECIFICATION

(11) **EP 1 250 811 B1**
(45) Date of publication and mention of the grant of the patent: **21.04.2004**
(21) Application number: 00992880.5
(22) Date of filing: 08.12.2000
(51) Int. Cl.: H04N 7/173

(54) **SYSTEM OF AND METHOD FOR SECURE FIRMWARE UPDATE AND LOADING OF CABLE MODEM**
SYSTEM UND VERFAHREN ZUR GESICHERTEN AKTUALISIERUNG UND ZUM LADEN VON KABELMODEMFIRMWARE
SYSTEME ET PROCEDE DE MISE A JOUR ET DE TELECHARGEMENT SECURISES DE MICROLOGICIELS DE MODEM POUR LE CABLE

(30) Priority: 15.12.1999 US 461985
(43) Date of publication of application: 23.10.2002
(73) Proprietor: Conexant Systems, Inc., Newport Beach, California 92660-3095 (US)
(72) Inventor: ESKIN, Michael, A., El Cajon, CA 92019 (US); MAIR, Steven, San Diego, CA 92129 (US)
(74) Representative: Akers, Noel James
(86) International application number: PCT/US2000/042688
(87) International publication number: WO 2001/045414

(56) References cited:
- WO-A-99/09743
- US-A- 5 680 457
- US-A- 5 701 492
- ITU-T Recommendation J.112, Transmission systems for interactive cable television services, International Telecommunication Union, Geneva, March 1998; pages i-v, 4, 12, 179-180

## Description

### Field of the Invention

This invention relates generally to the field of cable modems, and, more specifically, to the field of DOCSIS-compliant cable modems, particularly USB cable modems. Background

The DOCSIS (Data Over Cable Service Interface Specification) 1.0 standard for cable modems requires that the modem include a non-volatile flash memory for the storage of modem firmware. The standard further requires that the modem be capable of reprieving firmware updates via TFTP from a location specified by the cable system head end, storing them in the flash memory, and then rebooting itself to begin executing the updated firmware.

The problem is that flash memory is expensive, and is a major factor in the high cost of cable modems today. Moreover, the flash memory is required by the DOCSIS standard, and also performs the valuable function of providing non-volatile storage of the modem firmware. Therefore, it does not appear technically or practically feasible to remove the flash memory from the modem.

Consequently, there is a need for a system for and method of providing non-volatile storage of modem firmware which is DOCSIS-compliant and yet allows for reduced cost of the modem.

### SUMMARY OF THE INVENTION

According to the present invention there are provided cable modem systems as defined in claims 1 and 10 appended hereto and methods of powering up and updating the same as defined in claims 13 and 17 appended hereto.

In accordance with the purpose of the invention as broadly described herein, there is provided, in a first embodiment of the invention, a cable modem system comprising a cable modem and a host, with the cable modem coupled to the host through an interface. The cable modem comprises a non-volatile storage device for the storage of one or more encryption keys, a volatile storage device for the storage of modem firmware, and a processor for decrypting, using the one or more encryption keys, encrypted modem firmware as received from the host or an external source.

The processor is further configured for storing the decrypted firmware in the volatile storage device, and executing the modem firmware as stored in the volatile storage device. The host includes a non-volatile storage device for the storage of the encrypted modem firmware. In one implementation, the host is a PC, and the non-volatile storage device in the host is a hard disk. In this implementation, the processor in the PC is configured to download the encrypted modem firmware to the cable modem over the interface.

In one implementation, the interface between the PC and the cable modem is a USB interface, thus allowing plug and play operation of the modem. In one implementation example, the non-volatile storage device in the cable modem is configured to store boot firmware in addition to the decryption keys. In another example, the boot firmware is stored in a ROM which may be distinct from the device used to store the keys.

Through execution of the boot firmware, the processor in the cable modem is able to perform the functions of receiving encrypted modem firmware from an external source or the host, decrypting the firmware, storing the decrypted firmware in the volatile storage device in the cable modem, and rebooting the modem to begin execution of the firmware as stored in the volatile memory device.

In one implementation example, the non-volatile storage device in the cable modem is incapable of storing the cable modem firmware.

In one configuration, the host includes a volatile storage device for storing driver software for enabling the host co communicate with the cable modem over the interface between the two. In this configuration, the method of firmware encryption employed is DES encryption.

In one embodiment of a method in accordance with the invention, upon power up, the encrypted modem firmware is downloaded to the cable modem from the host. The firmware is then decrypted using one or more encryption keys maintained at the cable modem. The decrypted firmware is then stored in a volatile storage device maintained in the cable modem. The modem is then rebooted to execute the firmware as stored in the volatile storage device.

In a second embodiment of a method in accordance with the invention, when a firmware update is available from an external source such as a cable operator head end, the encrypted firmware update is received by the cable modem, and transferred to the host for storage in a non-volatile storage device. Optionally, one or more encryption keys are provided to the cable modem at the same time as the firmware update, but these one or more keys, if received, are not transferred to the host. Instead, only the encrypted firmware update is transferred to the host.

In the cable modem, the firmware update is decrypted using the one or more keys, and stored in a volatile storage device maintained in the cable modem. In addition, one or more encryption keys, if received from the external source, are stored in a non-volatile storage device maintained in the cable modem.

The cable modem is then rebooted to begin execution of the firmware update as stored in the volatile storage device.

By providing a non-volatile storage device in the host for the storage of the encrypted firmware or firmware update for the cable modem, the flash memory in the DOCSIS- compliant cable modem can be replaced with a smaller and less expensive volatile memory device for the storage of modem firmware. Although non-volatile storage is required for the storage of the one or more encryption keys and a boot program, the storage required will be smaller and less costly than the flash memory required to store the modem firmware. The result is a lower cost cable modem than in the past.

Moreover, it is believed that the DOCSIS-imposed mandate of a flash memory within the cable modem for the storage of the modem firmware is limited to modems which are external to the host, and interface thereto through the Ethernet. Therefore it is believed that this mandate is inapplicable to cable modems, such as those of the subject invention, which are typically internal to the host.

At the same time, the purpose of the DOCSIS-mandate-to contain the modem firmware within the modem itself to prevent tampering thereof by hackers and the like-is fulfilled since, in the subject invention, only encrypted firmware is passed between the cable modem and the host. In addition, to further maintain security, the encryption keys are maintained within the cable modem and not provided to the host were they can be accessed by hackers.

Consequently, it is believed that the cable modems of the subject invention will be likely candidates for DOCSIS- certification notwithstanding the lack of a flash memory therein for the storage of the modem firmware.

### BRIEF DESCRIPTION OF THE DRAWINGS

Figures 1A-1C illustrate example environments for adoption of the subject invention.
Figure 2A illustrates a first embodiment of a system in accordance with the subject invention.
Figure 2B illustrates a second embodiment of a system in accordance with the subject invention.
Figure 3A illustrates a first embodiment of a method in accordance with the subject invention.
Figure 3B illustrates a second embodiment of a method in accordance with the subject invention.

### DETAILED DESCRIPTION OF THE PREFERRED EMBODIMENTS

### I. Example Environments

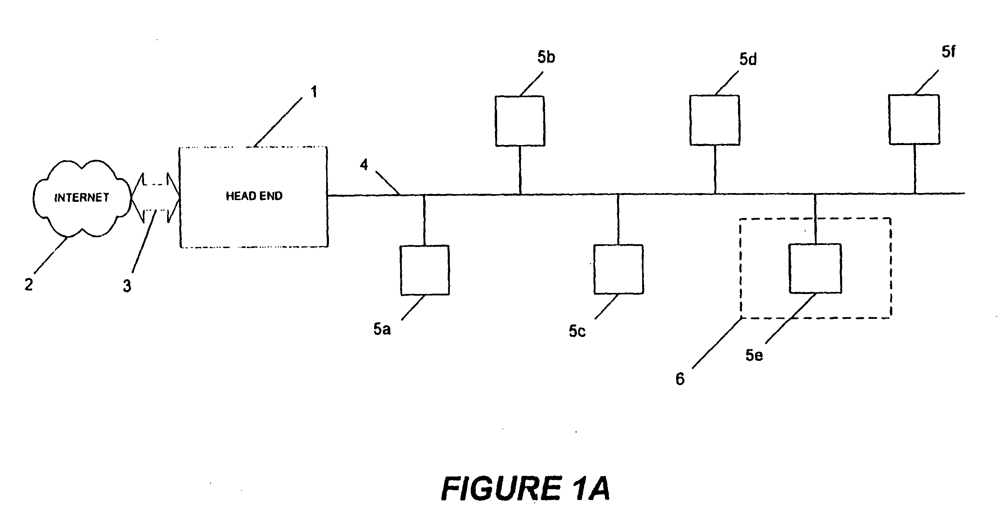

An example environment for adoption of the subject invention is illustrated in Figure 1A. As illustrated, one or more cable modems 5a, 5b, 5c, 5d, 5e, and 5f are coupled to a cable office head end 1 by means of a cable 4. Head end 1, in turn, is coupled to a computer network, such as the Internet 2, over a suitable interface 3. One or more of the cable modems, such as cable modem 5e, may be resident within a home, identified with numeral 6.

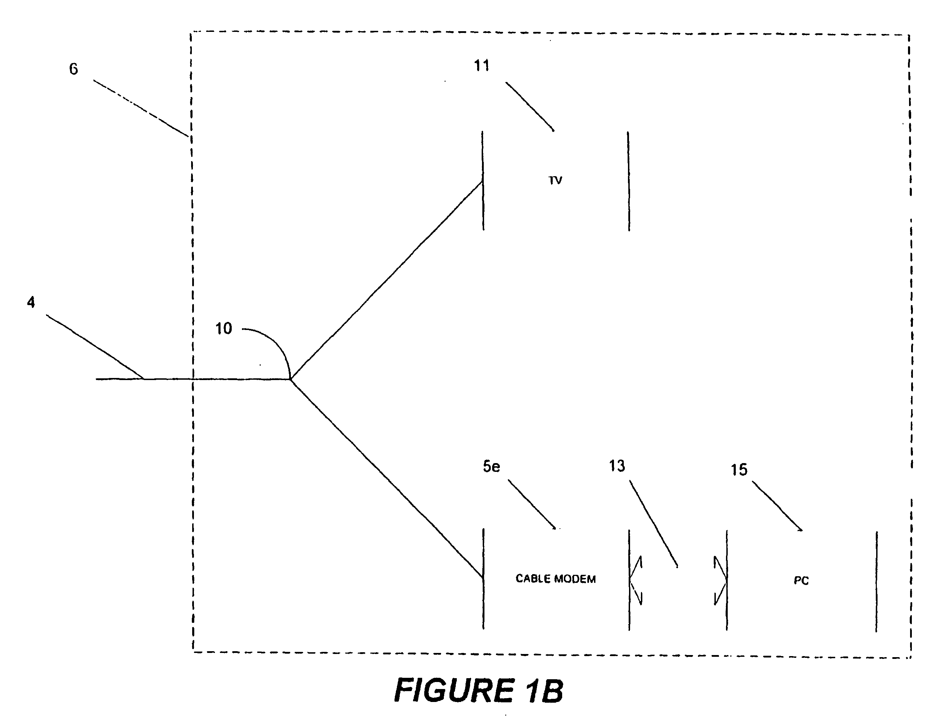

With reference to Figure 1B, within a typical home, the cable 4 is capable of delivering composite video for display on a TV, identified with numeral 11, or data (originating, for example, from computer network 2), for delivery by the cable modem 5e to a host such as PC 15 over interface 13. In this environment, the incoming cable 4 is split, by means of splitter 10, between the TV 11 and the cable modem 5e. Typically, the cable modem 5e is separate and distinct from host 15, and the interface 13 between the two is the Ethernet.

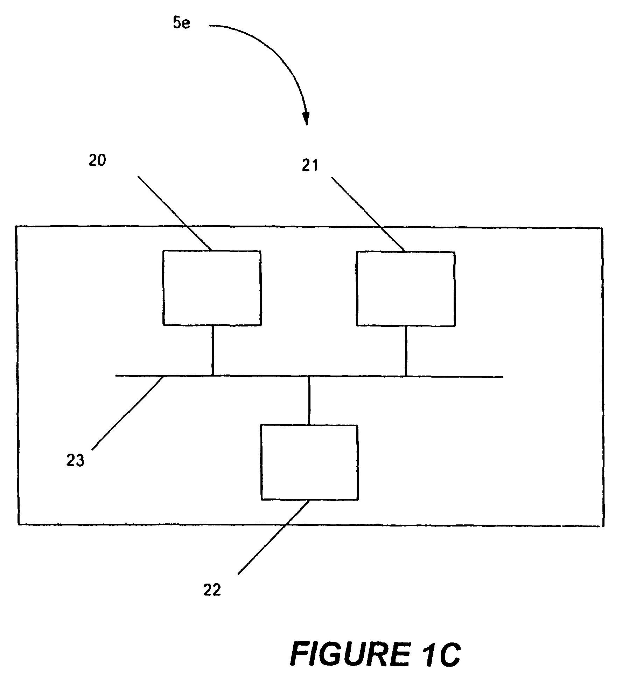

With reference to Figure 1C, a DOCSIS-compliant modem in such an environment typically comprises a processor 22, and flash memory 20 and RAM 21 accessible by the processor 22 over bus 23. The flash memory 20 provides non-volatile storage of the modem firmware. Upon power up, the modem is booted up, and a boot program resident in the flash memory loads the firmware into the RAM 21 for execution thereof by the processor 22.

Incoming data packets addressed to the modem 5e in such an environment are received by the modem and evaluated. If the packet is a command from the cable office head end requesting the cable modem to reconfigure itself, the command is executed, and no interaction is had with the PC 15 coupled to the cable modem. On the other hand, if the data packet is destined for the PC, the cable modem 5e simply passes it to the PC over the interface 13.

### II. Preferred Embodiments

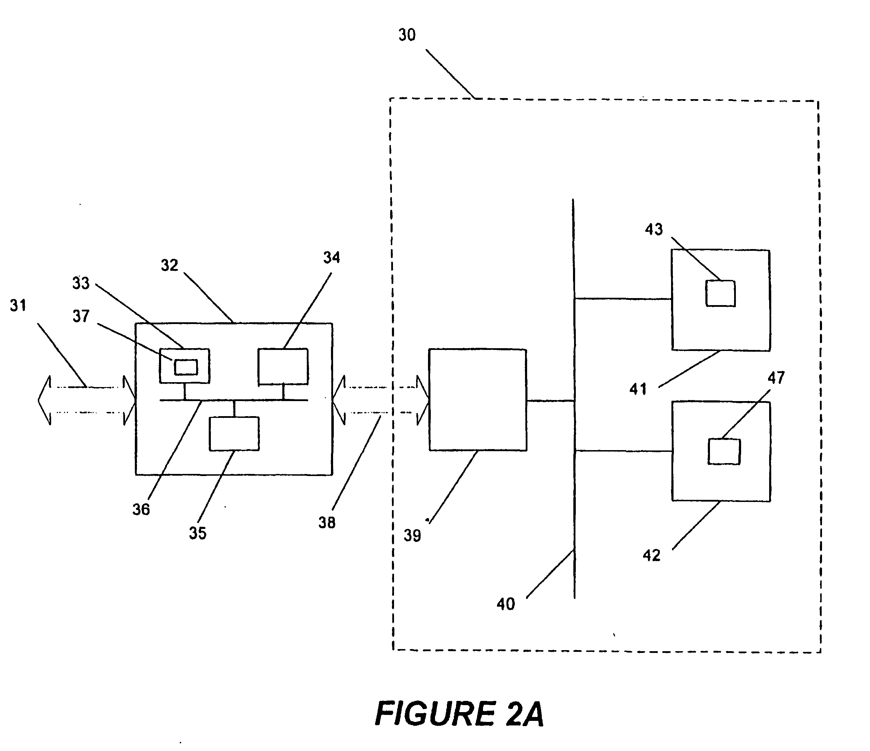

A first embodiment of the invention comprises a cable modem system. With reference to Figure 2A, the cable modem system comprises a host 30 and a cable modem 32. Cable modem 32 is interfaced to host 30 through interface 38. Although Figure 2A shows cable modem 32 as external to host 30, particularly in embodiments in which the interface 38 is a USB interface, the cable modem 32 may be internal to the host. In one implementation example, the cable modem 32 plugs into the backplane of the host.

Cable modem 32 comprises a non-volatile storage device 33 for the storage of one or more encryption keys 37, a volatile storage device 34 for the storage of modem firmware, and a processor 35 for decrypting, using the one or more encryption keys, encrypted modem firmware as received from the host over interface 38 or an external source (such as the head end server) over interface 31. The processor 35 is capable of accessing the non-volatile memory device 33 and the volatile memory device 34 through bus 36. The processor 35 is further configured for storing the decrypted firmware in the volatile storage device 34, and executing the modem firmware as stored in the volatile storage device 34.

The host includes a non-volatile storage device 41 for the storage of the encrypted modem firmware 43. In one implementation, the host is a PC, and the non-volatile storage device 41 in the PC is a hard disk. In this implementation, a processor 39 within the PC is configured to provide the encrypted modem firmware to the cable modem 32 over the interface 38. The processer 39 is capable of accessing the non-volatile storage device 41 over bus 40.

In one implementation, the interface 38 between the PC and the cable modem 32 is a USB interface, thus allowing plug and play operation of the modem. In one example, the non-volatile storage device 33 in the cable modem is an NVRAM configured to store boot firmware in addition to the decryption keys 37. Alternatively, the boot software could be stored in a ROM (not shown) accessible to processor 32 over interface 38. The boot software is provided to support USB plug and play operation. In one example, the volatile storage device 34 is RAM configured to store the modem firmware while the same is being executed.

In one implementation, through execution of the boot firmware, the processor 35 in the cable modem 32 performs the functions of receiving encrypted modem firmware from an external source or the host, decrypting the firmware, storing the decrypted firmware in the volatile storage device 34 in the cable modem, and then rebooting the modem to begin execution of the firmware as stored in the volatile memory device 34.

In one implementation example, the non-volatile storage device 33 in the cable modem 32 is incapable of storing the cable modem firmware.

In one configuration, the host 30 includes a volatile storage device 42 for storing driver software 47 for enabling the host 30 to communicate with the cable modem 32 over interface 38. In one implementation, the method of firmware encryption employed is DES encryption.

There are several possible methods for providing the encryption keys 37 to the cable modem 32. In one alternative, a newly purchased cable modem comes equipped with a non-volatile storage device in which is stored one or more default keys and modem firmware encrypted with the one or more default keys. When the modem is powered up, the boot program in the cable modem is executed, causing the encrypted modem firmware to be provided to the host 30 over interface 40. The host 30 stores the encrypted firmware in non-volatile storage device 43. In addition, processor 35 within the cable modem 32 decrypts the modem firmware, stores it in RAM 34, and then reboots itself, causing the decrypted modem firmware to be executed.

In another alternative, the one or more encryption keys are provided as part of the DOCSIS cable modem registration process. During this process, the modem is required to read a configuration file from the cable system head end. Included in this configuration file are one or more encryption keys for the modem, and firmware for the modem encrypted with the one or more encryption keys. These items are received by the cable modem, and then processed as in the previous alternative.

In a third alternative, one or more encryption keys are initially provided as per either of the above two alternatives, and then, one or more new keys are provided to the cable modem by the cable office head end when the modem firmware is updated. In this alternative, the one or more new keys are provided to the cable modem along with the updated firmware encrypted with the one or more new keys. The modem transfers the encrypted firmware update to the host, where it is stored in non-volatile memory device 43. Meanwhile, the cable modem stores the one or more new keys in NVRAM 33, decrypts the firmware update using the one or more new keys, and then stores the decrypted firmware update in RAM 34. The modem then reboots itself to begin execution of the firmware update.

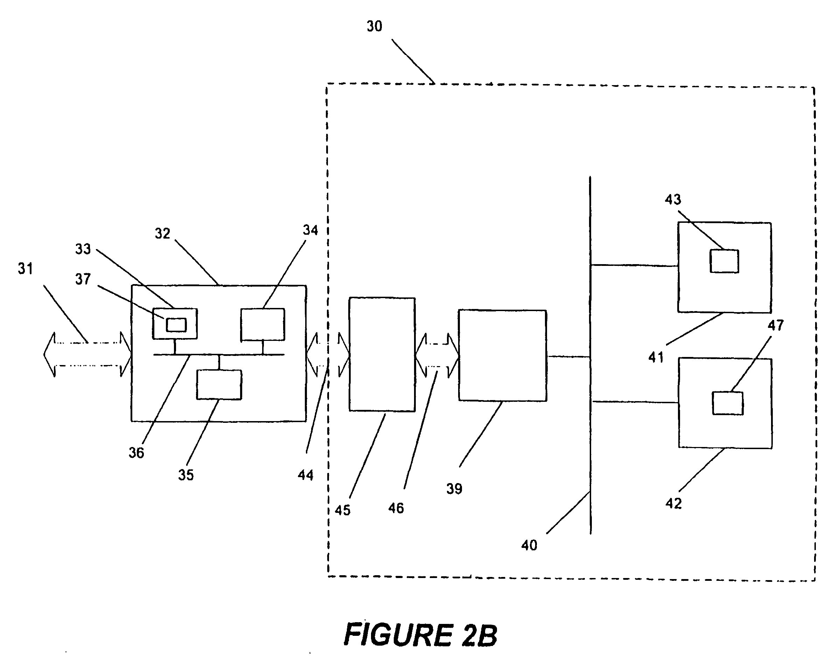

A second embodiment of a cable modem system in accordance with the subject invention is illustrated in Figure 2B. Compared to Figure 2A, like elements in Figure 2B are referenced with like identifying numerals.

As illustrated, in this embodiment, interface 38 of Figure 2A, which, in one implementation, is a USB interface, is replaced in Figure 2B with an Ethernet PCI interface which, in one implementation, comprises Ethernet interface 44, Ethernet/PCI conversion circuitry 45, and PCI interface 46. Otherwise, the structure and operation of the embodiment of Figure 2B is similar, if not identical, to that of Figure 2A. This embodiment is suitable for those applications in which the interface to the host is a PCI interface.

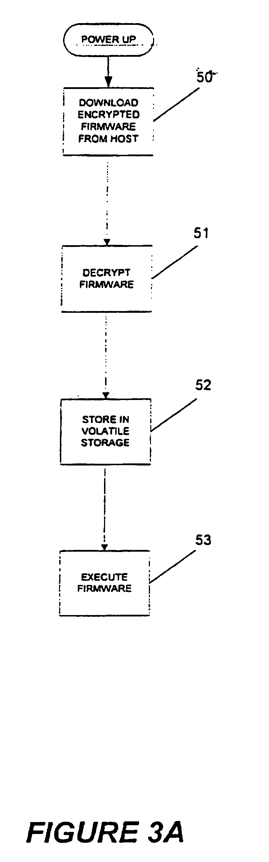

A first embodiment of a method of powering-up a cable modem in accordance with the subject invention is illustrated in Figure 3A. Prior to power-up, with reference to Figure 2A, the encrypted modem firmware is assumed to be stored in the non-volatile storage device 41 of host 30. Upon power-up, in step 50, the encrypted firmware is downloaded to the cable modem 32 from the host. In step 51, the firmware is then decrypted, in the cable modem, using the one or more encryption keys 37 maintained in the cable modem. In the embodiment of Figure 2A, the one or more keys are maintained in the non-volatile storage device 33 of the cable modem. In one configuration, in step 52, the decrypted firmware is then stored in a volatile storage device maintained in the cable modem. In one implementation of the embodiment of Figure 2A, the volatile storage device 34 is RAM. In step 53, the modem is then rebooted to execute the firmware as stored in the volatile storage device. In one implementation of the embodiment of Figure 2A, the boot program for the modem is maintained in ROM (not shown).

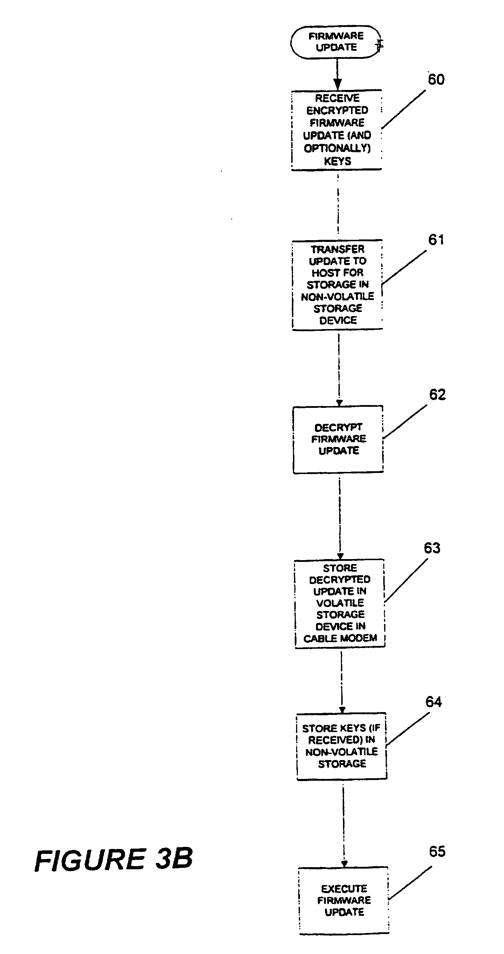

A second embodiment of a method of updating cable modem firmware in accordance with the subject invention is illustrated in Figure 3B. It is assumed that the firmware update is available from an external source such as a cable operator head end. In step 60, the encrypted firmware update is received by the cable modem. In the embodiment of Figure 2A, the update is received over interface 31. Optionally, updated one or more encryption keys are received at the same time. If new keys are received, it is assumed that the firmware update is encrypted with the new one or more keys.

In step 61, the encrypted update is transferred to the host for storage in a non-volatile storage device. In the embodiment of Figure 2A, the encrypted update is stored in non-volatile storage device 41. If one or more encryption keys are provided to the cable modem at the same time as the firmware update, these one or more keys are not transferred to the host. Instead, only the encrypted update is transferred.

In step 62, in the cable modem, the firmware update is then decrypted using the one cr more encryption keys maintained in the modem. In the embodiment of Figure 2A, the one or more encryption keys, identified with numeral 37, are maintained in non-volatile storage device 33.

In one implementation, in step 63, the decrypted update is stored in a volatile storage device maintained in the cable modem. In the embodiment of Figure 2A, the decrypted update is stored in volatile storage device 34 which, in one implementation, is RAM.

In step 65, the cable modem is then rebooted, to begin execution of the firmware update as stored in the volatile storage device. In one implementation of the embodiment of Figure 2A, the boot program for the cable modem is scored in ROM (not shown).

In one implementation example, a representation of the cable modem power-up process in pseudo-code is as follows:
System Powers On

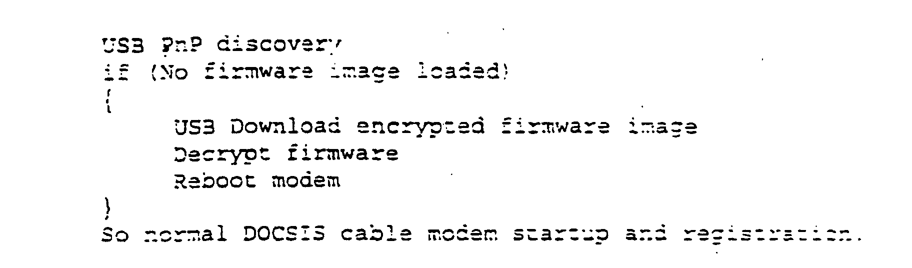

In this implementation example, a representation of the cable modem firmware update process in pseudo-code is as follows:

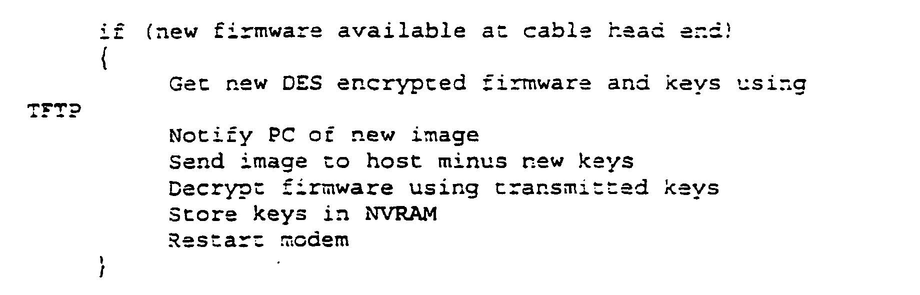

By providing a non-volatile storage device in the host for the storage of the encrypted firmware or firmware update for the cable modem, the flash memory in the DOCSIS- compliant cable modem can be replaced with smaller and less expensive volatile storage for the storage of the firmware within the modem. Although non-volatile storage is required for the storage of the encryption keys and a boot program, this storage is still much smaller and less costly than the flash memory required to maintain the modem firmware within the modem. The result is a lower cost cable modem than in the past.

Moreover, it is believed that the DOCSIS-imposed mandate of a flash memory within the cable modem for the storage of the modem firmware is limited to modems which are external to the host, such as cable modems which interface to the PC through the Ethernet. Therefore, it is believed this mandate inapplicable to cable modems, such as those of the subject invention, which typically are internal to the host and are interfaced thereto through a USB interface.

At the same time, the purpose of the DOCSIS-mandate-to contain the modem firmware within the modem itself to prevent tampering thereof by hackers and the like-is fulfilled since, in the subject invention, only encrypted firmware is passed between the cable modem and the host. In addition, to further maintain security, the encryption keys are maintained within the cable modem and not provided to the host were they are susceptible to being accessed by hackers.

Consequently, it is believed that the cable modems of the subject invention will be likely candidates for DOCSIS- certification notwithstanding the lack of a flash memory therein for the storage of the modem firmware.

While embodiments, implementations, and implementation examples of the subject invention have been shown and described, it should be apparent that there are many more embodiments, implementations, and implementation examples that are within the scope of the subject invention. Accordingly, the subject invention is not to be restricted, except in light of the appended claims and their equivalents.

## Claims

1. A cable modem system comprising:
a cable modem (5, 32) comprising: a non-volatile storage device (33) for the storage of one or more encryption keys; a volatile storage device (36) for the storage of decrypted modem firmware; and a processor (35) for accessing the non-volatile and volatile storage devices (33, 36) over a bus (36);
a host (30) including a non-volatile storage device (41) for the storage of encrypted modem firmware; and
an interface (38) for interfacing the cable modem (5, 32) and the host (30);
**characterised in that** the processor (35), upon power-up, is configured to receive the encrypted modem firmware as stored in the non-volatile storage device (41) in the host (30), decrypt the encrypted firmware using the one or more encryption keys maintained in the cable modem (5, 32); store the decrypted firmware in the volatile storage device (33) maintained in the cable modem (5, 32), and then begin execution of the decrypted firmware.

2. The system of claim 1 wherein the interface (38) is a USB interface.

3. The system of either of claims 1 or 2 wherein the non-volatile storage device (33) in the cable modem (5, 32) is NVRAM.

4. The system of any preceding claim wherein the host (30) is a PC.

5. The system of claim 4 wherein the non-volatile storage device (41) in the host (30) is a hard disk.

6. The system of claim 5 wherein the modem (5, 32) is internal to the host (30).

7. The system of any preceding claim wherein the interface (38) is an Etherent/PCI interface.

8. The system of any preceding claim wherein the non-volatile storage device (33) in the cable modem (5, 32) is incapable of storing the decrypted modem firmware.

9. The system of any preceding claim wherein the cable modem (5, 32) further comprises ROM for the storage of a boot program.

10. A cable modem system comprising:
a cable modem (5, 32) comprising: a volatile storage device (34) for the storage of decrypted modem firmware; and a processor (35) for accessing the volatile storage device (34) over a bus (36);
a host (30) including a non-volatile storage device (41) for the storage of encrypted modem firmware; and
a first interface (44) for interfacing the cable modem (5, 32) and the host (30);
a second interface (31) for interfacing the cable modem (5, 32) to an external source;
**characterised in that** the processor (35), upon the availability of an encrypted modem firmware update from the external source, is configured to receive the encrypted update from the external source over the second interface (31), provide the encrypted update to the host (30) over the first interface (44) for storing in the non-volatile storage device (41) in the host (30), decrypt the encrypted update using one or more encryption keys, store the decrypted update in the volatile storage device (34) maintained in the cable modem (5, 32), and then begin execution of the decrypted update.

11. The system of claim 10 wherein the processor (35) is further configured to receive the one or more encryption keys from the external source over the second interface (31).

12. The system of either claims 10 or 11 wherein the processor (35) is further configured to receive the one or more encryption keys from a non-volatile storage device (33) within the cable modem (5, 32) which is accessible by the processor (35).

13. A method of powering up a cable modem (5, 32) **characterised by** comprising the steps of:
upon power up, downloading to the cable modem (5, 32) encrypted modem firmware from non-volatile storage (33) maintained in a host (30);
decrypting, in the cable modem (5, 32), the encrypted firmware using one or more encryption keys maintained in the cable modem (5, 32);
executing, in the cable modem (5, 32), the decrypted firmware; and
storing the decrypted firmware in a volatile storage device (36) maintained in the cable modem (5, 32).

14. The method of claim 13 wherein the downloading step comprises downloading the encrypted firmware from a hard disk in a PC.

15. The method of either of claims 13 or 14 wherein the downloading step further comprises downloading the encrypted software from the host (30) over a USB interface or over a Ethernet/PCI interface.

16. The method of any of claims 13 to 15 wherein the one or more encryption keys are DES keys.

17. A method of updating the firmware of a cable modem (5, 32) **characterised by** comprising the steps of:
receiving by the cable modem (5, 32) an encrypted firmware update from an external source;
transferring to a host (30) the encrypted update for storing in a non-volatile storage device (41) maintained in the host (30);
decrypting, in the cable modem (5, 32), the decrypted firmware update using one or more encryption keys; and
executing, in the cable modem (5, 32), the decrypted firmware update.

18. The method of claim 17 wherein the external source comprises a cable operator head end.

19. The method of either of claims 17 or 18 further comprising receiving from the external source the one or more encryption keys.

20. The method of claim 19 further comprising storing, in a non-volatile storage device (33) maintained in the cable modem (5, 32), the one or more encryption keys.

21. The method of any of claims 17 to 20 further comprising retrieving the one or more encryption keys from a non-volatile storage device (33) maintained in the cable modem (5, 32).

22. The method of any of claims 17 to 21 further comprising storing the decrypted firmware update in a volatile storage device (36) maintained in the cable modem (5, 32).

## Patentansprüche

1. Kabelmodemsystem, umfassend:
ein Kabelmodem (5, 32), umfassend: eine nichtflüchtige Speichereinrichtung (33) zur Speicherung eines oder mehrerer Verschlüsselungsschlüssel; eine flüchtige Speichereinrichtung (36) zur Speicherung entschlüsselter Modem-Firmware; und einen Prozessor (35) zum Zugreifen auf die nichtflüchtige und die flüchtige Speichereinrichtung (33, 36) über einen Bus (36);
einen Host (30), der eine nichtflüchtige Speichereinrichtung (41) zur Speicherung verschlüsselter Modem-Firmware enthält; und
eine Schnittstelle (38) als Schnittstelle zwischen dem Kabelmodem (5, 32) und dem Host (30);
**dadurch gekennzeichnet, daß** der Prozessor (35) beim Herauffahren so konfiguriert ist, daß er die in der nichtflüchtigen Speichereinrichtung (41) in dem Host (30) gespeicherte verschlüsselte Modem-Firmware empfängt, die verschlüsselte Firmware unter Verwendung des einen oder der mehreren in dem Kabelmodem (5, 32) gehaltenen Verschlüsselungsschlüssel entschlüsselt; die entschlüsselte Firmware in der in dem Kabelmodem (5, 32) gehaltenen flüchtigen Speichereinrichtung (33) speichert und mit der Ausführung der entschlüsselten Firmware beginnt.

2. System nach Anspruch 1, wobei die Schnittstelle (38) eine USB-Schnittstelle ist.

3. System nach Anspruch 1 oder 2, wobei die nichtflüchtige Speichereinrichtung (33) in dem Kabelmodem (5, 32) NVRAM ist.

4. System nach einem der vorhergehenden Ansprüche, wobei der Host (30) ein PC ist.

5. System nach Anspruch 4, wobei die nichtflüchtige Speichereinrichtung (41) in dem Host (30) eine Festplatte ist.

6. System nach Anspruch 5, wobei das Modem (5, 32) ein internes Modem in dem Host (30) ist.

7. System nach einem der vorhergehenden Ansprüche, wobei die Schnittstelle (38) eine Ethernet-/PCI-Schnittstelle ist.

8. System nach einem der vorhergehenden Ansprüche, wobei die nichtflüchtige Speichereinrichtung (33) in dem Kabelmodem (5, 32) nicht fähig ist, die entschlüsselte Modem-Firmware zu speichern.

9. System nach einem der vorhergehenden Ansprüche, wobei das Kabelmodem (5, 32) weiterhin ROM zur Speicherung eines Boot-Programms umfaßt.

10. Kabelmodemsystem, umfassend:
ein Kabelmodem (5, 32), umfassend: eine flüchtige Speichereinrichtung (34) zur Speicherung entschlüsselter Modem-Firmware; und einen Prozessor (35) zum Zugreifen auf die flüchtige Speichereinrichtung (34) über einen Bus (36);
einen Host (30), der eine nichtflüchtige Speichereinrichtung (41) zur Speicherung verschlüsselter Modem-Firmware enthält; und
eine erste Schnittstelle (44) als Schnittstelle zwischen dem Kabelmodem (5, 32) und dem Host (30);
eine zweite Schnittstelle (31) als Schnittstelle von dem Kabelmodem (5, 32) zu einer externen Quelle;
**dadurch gekennzeichnet, daß** der Prozessor (35) bei Verfügbarkeit einer verschlüsselten Modem-Firmware-Aktualisierung von der externen Quelle so konfiguriert ist, daß er die verschlüsselte Aktualisierung über die zweite Schnittstelle (31) von der externen Quelle empfängt, die verschlüsselte Aktualisierung über die erste Schnittstelle (44) dem Host (30) zur Speicherung in der nichtflüchtigen Speichereinrichtung (41) in dem Host (30) zuführt, die verschlüsselte Aktualisierung unter Verwendung eines oder mehrerer Verschlüsselungsschlüssel entschlüsselt, die entschlüsselte Aktualisierung in der in dem Kabelmodem (5, 32) gehaltenen flüchtigen Speichereinrichtung (34) speichert und dann mit der Ausführung der entschlüsselten Aktualisierung beginnt.

11. System nach Anspruch 10, wobei der Prozessor (35) weiterhin so konfiguriert ist, daß er den einen oder die mehreren Verschlüsselungsschlüssel über die zweite Schnittstelle (31) von der externen Quelle empfängt.

12. System nach Anspruch 10 oder 11, wobei der Prozessor (35) weiterhin so konfiguriert ist, daß er den einen oder die mehreren Verschlüsselungsschlüssel von einer nichtflüchtigen Speichereinrichtung (33) in dem Kabelmodem (5, 32) empfängt, die dem Prozessor (35) zugänglich ist.

13. Verfahren zum Herauffahren eines Kabelmodems (5, 32), **gekennzeichnet durch** die folgenden Schritte:
beim Herauffahren, Herunterladen verschlüsselter Modem-Firmware von einer in einem Host (30) gehaltenen nichtflüchtigen Speicherung (33) auf das Kabelmodem (5, 32);
Entschlüsseln der verschlüsselten Firmware in dem Kabelmodem (5, 32) unter Verwendung eines oder mehrerer in dem Kabelmodem (5, 32) gehaltener Verschlüsselungsschlüssel;
Ausführen der entschlüsselten Firmware in dem Kabelmodem (5, 32); und
Speichern der entschlüsselten Firmware in einer in dem Kabelmodem (5, 32) gehaltenen flüchtigen Speichereinrichtung (36).

14. Verfahren nach Anspruch 13, wobei der Schritt des Herunterladens das Herunterladen der verschlüsselten Firmware von einer Festplatte in einem PC umfaßt.

15. Verfahren nach Anspruch 13 oder 14, wobei der Schritt des Herunterladens weiterhin das Herunterladen der verschlüsselten Software von dem Host (30) über eine USB-Schnittstelle oder über eine Ethernet-/PCI-Schnittstelle umfaßt.

16. Verfahren nach einem der Ansprüche 13 bis 15, wobei der eine oder die mehreren Verschlüsselungsschlüssel DES-Schlüssel sind.

17. Verfahren zum Aktualisieren der Firmware eines Kabelmodems (5, 32), **gekennzeichnet durch** die folgenden Schritte:
Empfangen einer verschlüsselten Firmware-Aktualisierung von einer externen Quelle **durch** das Kabelmodem (5, 32);
Transferieren der verschlüsselten Aktualisierung zu einem Host (30) zur Speicherung in einer in dem Host (30) gehaltenen nichtflüchtigen Speichereinrichtung (41);
Entschlüsseln der verschlüsselten Firmware-Aktualisierung in dem Kabelmodem (5, 32) unter Verwendung eines oder mehrerer Verschlüsselungsschlüssel; und
Ausführen der entschlüsselten Firmware-Aktualisierung in dem Kabelmodem (5, 32).

18. Verfahren nach Anspruch 17, wobei die externe Quelle eine Kopfstelle eines Kabelbetreibers umfaßt.

19. Verfahren nach Anspruch 17 oder 18, bei dem weiterhin der eine oder die mehreren Verschlüsselungsschlüssel aus der externen Quelle empfangen werden.

20. Verfahren nach Anspruch 19, bei dem weiterhin der eine oder die mehreren Verschlüsselungsschlüssel in einer in dem Kabelmodem (5, 32) gehaltenen nichtflüchtigen Speichereinrichtung (33) gespeichert werden.

21. Verfahren nach Anspruch 17 bis 20, bei dem weiterhin der eine oder die mehreren Verschlüsselungsschlüssel aus einer in dem Kabelmodem (5, 32) gehaltenen nichtflüchtigen Speichereinrichtung (33) abgerufen werden.

22. Verfahren nach einem der Ansprüche 17 bis 21, bei dem weiterhin die entschlüsselte Firmware-Aktualisierung in einer in dem Kabelmodem (5, 32) gehaltenen flüchtigen Speichereinrichtung (36) gespeichert wird.

## Revendications

1. Système de modem câblé, comprenant :
un modem câblé (5, 32) comprenant : un dispositif de mémorisation non volatile (33) pour la mémorisation d'une ou de plusieurs clés de chiffrement ; un dispositif de mémorisation volatile (36) pour la mémorisation de micrologiciels de modem déchiffrés ; et un processeur (35) pour accéder aux dispositifs de mémorisation non volatile et volatile (33, 36) sur un bus (36) ;
un hôte (30) comportant un dispositif de mémorisation non volatile (41) pour la mémorisation de micrologiciels de modem chiffrés ; et
une interface (38) pour interfacer le modem câblé (5, 32) et l'hôte (30) ;
**caractérisé en ce que**, à la mise sous tension, le processeur (35) est configuré pour recevoir les micrologiciels de modem chiffrés mémorisés dans le dispositif de mémorisation non volatile (41) dans l'hôte (30), déchiffrer les micrologiciel chiffrés à l'aide desdites une ou plusieurs clés de chiffrement maintenues dans le modem câblé (5, 32) ; mémoriser les micrologiciels déchiffrés dans le dispositif de mémorisation volatile (33) maintenu dans le modem câblé (5, 32) puis lancer l'exécution des micrologiciels déchiffrés.

2. Système selon la revendication 1, dans lequel l'interface (38) est une interface USB.

3. Système selon la revendication 1 ou 2, dans lequel le dispositif de mémorisation non volatile (33) dans le modem câblé (5, 32) est une RAM non volatile.

4. Système selon l'une quelconque des revendications précédentes, dans lequel l'hôte (30) est un PC.

5. Système selon la revendication 4, dans lequel le dispositif de mémorisation non volatile (41) dans l'hôte (30) est un disque dur.

6. Système selon la revendication 5, dans lequel le modem (5, 32) est interne à l'hôte (30).

7. Système selon l'une quelconque des revendications précédentes, dans lequel l'interface (38) est une interface Ethernet/PCI.

8. Système selon l'une quelconque des revendications précédentes, dans lequel le dispositif de mémorisation non volatile (33) dans le modem câblé (5, 32) est incapable de mémoriser les micrologiciels de modem déchiffrés.

9. Système selon l'une quelconque des revendications précédentes, dans lequel le modem câblé (5, 32) comprend en outre une ROM pour la mémorisation d'un programme de démarrage.

10. Système de modem câblé, comprenant :
un modem câblé (5, 32) comprenant : un dispositif de mémorisation volatile (34) pour la mémorisation de micrologiciels de modem déchiffrés ; et un processeur (35) pour accéder au dispositif de mémorisation volatile (34) sur un bus (36) ;
un hôte (30) comportant un dispositif de mémorisation non volatile (41) pour la mémorisation de micrologiciels de modem chiffrés ; et
une première interface (44) pour interfacer le modem câblé (5, 32) et l'hôte (30) ;
une deuxième interface (31) pour interfacer le modem câblé (5, 32) et une source externe ;
**caractérisé en ce que**, lors de la mise à disposition d'une mise à jour chiffrée des micrologiciels de modem auprès de la source externe, le processeur (35) est configuré pour recevoir la mise à jour chiffrée à partir de la source externe sur la deuxième interface (31), fournir la mise à jour chiffrée à l'hôte (30) sur la première interface (44) pour la mémoriser dans le dispositif de mémorisation non volatile (41) dans l'hôte (30), déchiffrer la mise à jour chiffrée à l'aide d'un ou de plusieurs clés de chiffrement, mémoriser la mise à jour déchiffrée dans le dispositif de mémorisation volatile (34) maintenu dans le modem câblé (5, 32) puis lancer l'exécution de la mise à jour déchiffrée.

11. Système selon la revendication 10, dans lequel le processeur (35) est en outre configuré pour recevoir lesdites une ou plusieurs clés de chiffrement à partir de la source externe sur la deuxième interface (31).

12. Système selon les revendications 10 ou 11, dans lequel le processeur (35) est en outre configuré pour recevoir lesdites une ou plusieurs clés de chiffrement à partir du dispositif de mémorisation non volatile (33) dans le modem câblé (5, 32), lequel est accessible par le processeur (35).

13. Procédé de mise sous tension d'un modem câblé (5, 32), **caractérisé en ce qu'**il comprend les étapes de :
à la mise sous tension, téléchargement vers le modem câblé (5, 32) de micrologiciels de modem chiffrés à partir d'un dispositif de mémorisation non volatile (33) maintenu dans un hôte (30) ;
déchiffrement dans le modem câblé (5, 32) des micrologiciels chiffrés à l'aide d'une ou de plusieurs clés de chiffrement maintenues dans le modem câblé (5, 32) ;
exécution dans le modem câblé (5, 32) des micrologiciels déchiffrés ; et
mémorisation des micrologiciels déchiffrés dans un dispositif de mémorisation volatile (36) maintenu dans le modem câblé (5, 32).

14. Procédé selon la revendication 13, dans lequel l'étape de téléchargement comprend le téléchargement des micrologiciels chiffrés à partir d'un disque dur dans un PC.

15. Procédé selon l'une des revendications 13 ou 14, dans lequel l'étape de téléchargement comprend en outre le téléchargement des micrologiciels chiffrés à partir de l'hôte (30) sur une interface USB ou sur une interface Ethernet/PCI.

16. Procédé selon l'une quelconque des revendications 13 à 15, dans lequel lesdites une ou plusieurs clés de chiffrement sont des clés DES.

17. Procédé de mise à jour des micrologiciels d'un modem câblé (5, 32), **caractérisé en ce qu'**il comprend les étapes de :
réception par le modem câblé (5, 32) d'une mise à jour de micrologiciels chiffrée à partir d'une source externe ;
transfert jusqu'à un hôte (30) de la mise à jour chiffrée pour la mémoriser dans un dispositif de mémorisation non volatile (41) maintenu dans l'hôte (30) ;
déchiffrement dans le modem câblé (5, 32) de la mise à jour des micrologiciels déchiffrée à l'aide d'une ou de plusieurs clés de chiffrement ; et
exécution dans le modem câblé (5, 32) de la mise à jour des micrologiciels déchiffrée.

18. Procédé selon la revendication 17, dans lequel la source externe comprend une tête de réseau de cablo-opérateur.

19. Procédé selon les revendications 17 ou 18, comprenant en outre la réception desdites une ou plusieurs clés de chiffrement à partir de la source externe.

20. Procédé selon la revendication 19, comprenant en outre la mémorisation, dans un dispositif de mémorisation non volatile (33) maintenu dans le modem câblé (5, 32), desdites une ou plusieurs clés de chiffrement.

21. Procédé selon l'une quelconque des revendications 17 à 20, comprenant en outre l'extraction desdites une ou plusieurs clés de chiffrement d'un dispositif de mémorisation non volatile (33) maintenu dans le modem câblé (5, 32).

22. Procédé selon l'une quelconque des revendications 17 à 21, comprenant en outre la mémorisation de la mise à jour des micrologiciels déchiffrée dans un dispositif de mémorisation volatile (36) maintenu dans le modem câblé (5, 32).
